# FASCICULE DE BREVET EUROPEEN

(11) **EP 0 547 964 B1**
(45) Date de publication et mention de la délivrance du brevet: **10.04.1996**
(21) Numéro de dépôt: 92403421.8
(22) Date de dépôt: 16.12.1992
(51) Int. Cl.: H02B 1/20, H01R 9/26

(54) **Barre omnibus pour l'alimentation en parallèle d'appareils électriques modulaires**
Sammelschiene zur Parallelversorgung von modularen elektrischen Geräten
Bus bar for parallel supply of modular electrical apparatus

(30) Priorité: 18.12.1991 FR 9115718
(43) Date de publication de la demande: 23.06.1993
(73) Titulaire: LEGRAND, F-87045 Limoges Cédex (FR)
(72) Inventeur: Combas, Christian, F-87240 Ambazac (FR)
(74) Mandataire: CABINET BONNET-THIRION

(56) Documents cités:
- DE-U- 1 990 998
- DE-U- 7 723 993
- FR-A- 2 595 880
- FR-A- 2 647 272
- US-A- 3 328 514

## Description

La présente invention concerne d'une manière générale l'alimentation d'appareils électriques modulaires disposés côte à côte, par exemple sur un même rail de support, lorsque cette alimentation se fait conjointement en parallèle pour l'ensemble de ces appareils.

Il peut s'agir par exemple de disjoncteurs ou de coupe-circuit.

Pour l'alimentation en parallèle de tels appareils électriques modulaires, il est usuel de mettre en oeuvre des barres omnibus comportant une longrine métallique, et issues de place en place de celle-ci, à la manière des dents d'un peigne, une pluralité de pattes de connexion à engager dans les bornes concernées de ces appareils électriques modulaires.

En pratique, la longrine de ces barres omnibus est enserrée dans une gaine isolante à section transversale en U, qui en recouvre l'une et l'autre des deux faces principales, en chevauchant transversalement l'ensemble à la manière d'un étrier, et dont font saillie, à la faveur de la fente opposée à sa partie médiane, les pattes de connexion.

S'agissant, par exemple, d'appareils électriques unipolaires, auxquels la présente invention est plus particulièrement, mais non exclusivement, destinée, deux barres omnibus sont à mettre en oeuvre, l'une pour relier entre elles les bornes de phase de ces appareils, l'autre pour relier entre elles leurs bornes de neutre.

Il est avantageux, pour des raisons de simplicité et de sécurité, de pouvoir identifier d'un simple regard ces barres omnibus, par exemple pour savoir immédiatement à vue celle qui est susceptible de se trouver sous tension et celle qui ne l'est pas.

Il a donc été proposé de les affecter de repères, et, plus précisément, de repères colorés.

Mais, sans autre, cette disposition conduit à une duplication dispendieuse des fabrications et des stocks, deux barres omnibus de types distincts s'avérant nécessaires, l'une pour les bornes de phase, l'autre pour les bornes de neutre.

Fondée sur l'observation qu'en service seule l'une des faces principales de ces barres omnibus est visible parce que les appareils électriques modulaires qu'elles relient sont alors adossés à un support vers lequel est tournée l'autre de leurs faces principales, la présente invention a d'une manière générale pour objet une disposition permettant de se satisfaire d'un seul type de barres omnibus tant pour les bornes de phase de ces appareils que pour leurs bornes de neutre.

De manière plus précise, elle a pour objet une barre omnibus du genre comportant, pour l'alimentation en parallèle d'appareils électriques modulaires, une longrine métallique enserrée dans une gaine isolante qui recouvre l'une et l'autre de ses deux faces principales, avec, de place en place, une pluralité de pattes de connexion, qui, issues de cette longrine, font saillie hors de la gaine isolante, et, d'une des faces principales à l'autre de la gaine isolante, des moyens de différenciation permettant de distinguer l'une de l'autre ces faces principales caractérisée en ce que les moyens de différenciation des faces principales de la gaine isolante sont des repères permettant le repérage de l'alimentation des appareils électriques concernés.

Préférentiellement, il s'agit de repères colorés s'étendant uniformément sur toute la longueur des faces principales qu'ils affectent, et, par exemple, l'un d'eux est rouge, pour les bornes de phase, tandis que, pour les bornes de neutre, l'autre est bleu.

Quoi qu'il en soit, un seul type de barres omnibus convient ainsi indifféremment aux bornes de phase et aux bornes de neutre.

Il suffit, en effet, à l'installateur, de monter dans un sens ou dans l'autre une telle barre omnibus suivant la nature des bornes à relier, en choisissant le sens de montage de manière à ce que, après ce montage, la face principale visible de la gaine isolante soit celle portant le repère coloré correspondant à ces bornes.

La fabrication et le stockage des barres omnibus concernées s'en trouvent avantageusement simplifiés, au bénéfice de leurs coûts.

Dans le modèle d'utilité allemand No DE-U-77 23 993, qui concerne une barre omnibus, il n'est pas question de repérage pour cette barre omnibus.

Si, cependant, les faces principales de celle-ci peuvent dans certains cas se trouver différenciées, les différences correspondantes résultent du sens de montage de la baguette profilée constituant son enveloppe isolante et ne peuvent donc pas servir à une quelconque identification.

Dans la demande de brevet français No FR-A-2 595 880, qui concerne deux barres omnibus regroupées dans un même fourreau isolant, il n'est pas non plus question d'un quelconque repérage de ces barres omnibus.

Certes, la face avant, au moins, de leur fourreau isolant commun est aménagée de manière à permettre d'y rapporter des inscriptions.

Mais ces inscriptions concernent les conducteurs de départ des appareils électriques concernés, pour l'identification des circuits d'utilisation desservis par ceux-ci.

Elles ne peuvent en rien concerner les barres omnibus dont les pattes de connexion forment les conducteurs d'arrivée de ces appareils électriques.

En outre, ces pattes de connexion étant coudées, la face avant du fourreau isolant ainsi munie d'inscriptions est formée par la tranche de ce fourreau isolant.

Il ne s'agit en aucune façon d'une face principale de celui-ci.

Les repères suivant l'invention permettent avantageusement le repérage de l'alimentation en amont des appareils électriques modulaires concernés, ou, autrement dit, le repérage des arrivées de courant sur ces appareils électriques.

Les caractéristiques et avantages de l'invention ressortiront d'ailleurs de la description qui va suivre, à titre d'exemple, en référence aux dessins schématiques annexés sur lesquels :
la figure 1 est une vue partielle en perspective d'une barre omnibus suivant l'invention, avec une vue en perspective d'appareils électriques modulaires susceptibles d'être desservis par cette barre omnibus ;
la figure 2 est, à échelle supérieure, une vue partielle en plan de la barre omnibus suivant l'invention, vue d'un premier côté, suivant la flèche II de la figure 1 ;
la figure 3 en est une vue en coupe transversale, suivant la ligne III-III de la figure 2 ;
la figure 4 en est une vue partielle en élévation analogue à celle de la figure 2, mais vue de l'autre côté, suivant la flèche IV de la figure 3 ;
la figure 5 est une vue en coupe transversale analogue à celle de la figure 3 pour une variante de réalisation.

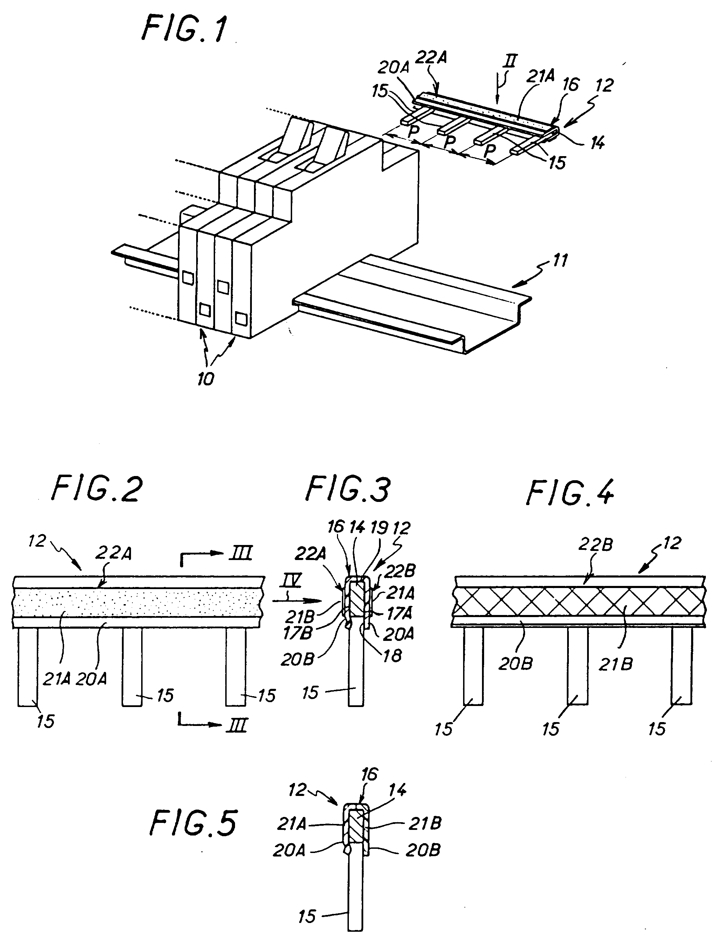

Tel qu'illustré sur la figure 1, il s'agit, globalement, d'assurer l'alimentation en parallèle d'appareils électriques modulaires 10 disposés côte à côte.

Ces appareils électriques modulaires 10 sont par exemple des disjoncteurs ou des coupe-circuit encliquetés sur un même rail de support 11.

De manière connue en soi, leur alimentation se fait à l'aide de barres omnibus 12, à raison d'une telle barre omnibus 12 pour chacune de leurs bornes de phase, et d'une autre pour leur borne de neutre.

Par mesure de simplicité, seule l'une de ces barres omnibus 12 a été représentée sur la figure 1.

Cette barre omnibus 12 est représentée plus en détail sur les figures 2 à 5.

De manière connue en soi, elle comporte, longitudinalement, une longrine 14 métallique, et, de place en place, latéralement, suivant en pratique un pas régulier P correspondant à celui des appareils électriques modulaires 10, une pluralité de pattes de connexion 15 issues d'un seul tenant de cette longrine 14.

Ces pattes de connexion 15 s'étendent perpendiculairement à la longrine 14, d'un même côté de celle-ci, à la manière des dents d'un peigne.

En pratique, la longrine 14 est plate et de section transversale sensiblement rectangulaire, et il en est de même des pattes de connexion 15, l'ensemble venant de la découpe d'un seul et même flan.

En pratique, également, la longrine 14 est enserrée longitudinalement dans une gaine isolante 16 à section transversale en U, qui recouvre d'un seul tenant l'une et l'autre de ses faces principales 17A, 17B, en chevauchant transversalement l'ensemble à la manière d'un étrier, et dont font saillie les pattes de connexion 15 à la faveur de la fente 18 opposée à sa partie médiane 19.

Suivant l'invention, les faces principales 20A, 20B de la gaine isolante 16 sont chacune respectivement affectées de repères 21A, 21B différents.

En pratique, dans les formes de réalisation représentées, les repères 21A, 21B sont des repères colorés et ceux-ci s'étendent uniformément sur toute la longueur des faces principales 20A, 20B qu'ils affectent.

Il s'agit, par exemple, et tel que représenté, de bandes colorées courant longitudinalement en continu sur ces faces principales 20A, 20B.

Par exemple, le repère 21A, schématisé par des points sur les figures 1 et 2, est rouge, et le repère 21B opposé, schématisé par un réseau quadrillé de hachures sur la figure 4, est bleu.

Quoi qu'il en soit, le fait que les repères 21A, 21B ainsi constitués s'étendent en continu sur toute la longueur des faces principales 20A, 20B qu'ils affectent permet avantageusement de pouvoir si désiré tronçonner à la demande une barre omnibus 12 en laissant chacun des tronçons de celle-ci bénéficier des mêmes avantages de repérage que l'ensemble.

Dans la forme de réalisation plus particulièrement représentée sur les figures 1 à 4, les repères 21A, 21B ne s'étendent transversalement que sur une partie de la largeur des faces principales 20A, 20B qu'ils affectent.

Par exemple, et tel que représenté, l'un au moins d'entre eux, et chacun de ceux-ci, est porté par une étiquette 22A, 22B dûment rapportée, par exemple par collage, à l'aide d'un simple adhésif, sur la face principale 20A, 20B concernée.

En pratique, la gaine isolante 16 est en matière synthétique.

Lorsque, comme indiqué, elle porte sur ses faces principales 20A, 20B des étiquettes 22A, 22B munies de repères 21A, 21B, elle est par exemple noire dans sa masse.

En service, et tel que représenté à la figure 1, seule l'une des faces principales 20A, 20B de la gaine isolante 16 est visible.

Tel que représenté, il s'agit par exemple de la face principale 20A, porteuse du repère 21A.

Ce repère 21A est par exemple associé aux bornes de phase des appareils électriques modulaires 10, cependant que le repère 21B opposé est associé à leur borne de neutre.

Suivant la variante de réalisation représentée sur la figure 5, le repère 21A, 21B de l'une au moins des faces principales 20A, 20B de la gaine isolante 16, et en pratique chacun de ceux-ci, résulte de la coloration dans sa masse de la paroi correspondante de cette gaine isolante 16.

Par exemple, et tel que représenté, ces repères 21A, 21B s'étendent alors transversalement sur toute la largeur des faces principales 20A, 20B de la gaine isolante 16, en se rejoignant l'un l'autre sur la tranche de la longrine 14 opposée aux pattes de connexion 15, suivant l'axe de la partie médiane de cette gaine isolante 16.

Lorsque, comme indiqué, les repères 21A, 21B sont des repères colorés, la gaine isolante 16 ainsi constituée peut par exemple être obtenue par co-extrusion bicolore.

Suivant une autre variante de réalisation non représentée, l'un au moins des repères 21A, 21B, et en pratique chacun de ceux-ci, résulte d'une impression directement appliquée sur la face principale 20A, 20B correspondante de la gaine isolante 16, suivant l'une quelconque des techniques connues en la matière, telles que sérigraphie, jet d'encre ou autre. Lorsque, comme plus particulièrement décrit, les repères mis en oeuvre sont des repères colorés, les couleurs retenues ne sont pas nécessairement celles indiquées.

Par exemple, ces couleurs peuvent au contraire être le noir et le bleu.

Mais il va de soi que les repères mis en oeuvre ne sont pas non plus nécessairement des repères colorés.

Il pourrait au contraire tout aussi bien s'agir d'autres types de repères, et, par exemple, de mots ou de lettres conventionnels, tels que les lettres P' (pour phase) et N (pour neutre), éventuellement répétés le long des faces principales concernées en étant si désiré plus ou moins espacés.

## Revendications

1. Barre omnibus pour l'alimentation en parallèle d'appareils électriques modulaires, du genre comportant une longrine (14) métallique enserrée dans une gaine isolante (16) qui recouvre l'une et l'autre de ses deux faces principales (17A,17B), avec, de place en place, une pluralité de pattes de connexion (15), qui, issues de la longrine (14), font saillie hors de la gaine isolante (16), et, d'une des faces principales (20A,20B) à l'autre de la gaine isolante (16), des moyens de différenciation permettant de distinguer l'une de l'autre ces faces principales (20A,20B), caractérisée en ce que les moyens de différenciation des faces principales (20A,20B) de la gaine isolante (16) sont des repères (21A,21B) permettant le repérage de l'alimentation des appareils électriques concernés.

2. Barre omnibus suivant la revendication 1, caractérisée en ce que les repères (21A, 21B) sont des repères colorés.

3. Barre omnibus suivant l'une quelconque des revendications 1, 2, caractérisée en ce que les repères (21A, 21B) s'étendent uniformément sur toute la longueur des faces principales (20A, 20B) qu'ils affectent.

4. Barre omnibus suivant l'une quelconque des revendications 1 à 3, caractérisée en ce que le repère (21A, 21B) de l'une au moins des faces principales (20A, 20B) de la gaine isolante (16) est porté par une étiquette (22A, 22B) dûment rapportée sur celle-ci.

5. Barre omnibus suivant l'une quelconque des revendications 1 à 4, caractérisée en ce que le repère (21A, 21B) de l'une au moins des faces principales (20A, 20B) de la gaine isolante (16) résulte de l'application d'une impression sur celle-ci.

6. Barre omnibus suivant la revendication 2, caractérisée en ce que le repère (21A, 21B) de l'une au moins des faces principales (20A, 20B) de la gaine isolante (16) résulte de la coloration dans la masse de la paroi correspondante de la gaine isolante (16).

7. Barre omnibus suivant la revendication 2, caractérisée en ce que, pour l'une des faces principales (20A, 20B) de la gaine isolante (16), le repère coloré (21A, 21B) est bleu, et il est rouge pour l'autre.

8. Barre omnibus suivant la revendication 2, caractérisée en ce que, pour l'une des faces principales (20A, 20B) de la gaine isolante (16), le repère coloré (21A, 21B) est bleu, et il est noir pour l'autre.

## Patentansprüche

1. Sammelschiene für die parallele Speisung von modularen elektrischen Geräten, umfassend einen metallischen Längsträger (14), der in eine isolierende Hülle (16) eingeklemmt ist, die die eine und die andere seiner beiden Hauptseiten (17A, 17B) bedeckt, mit, von Stelle zu Stelle, einer Vielzahl von Anschlußarmen, die von dem Längsträger (14) ausgehen und aus der isolierenden Hülle (16) hervorstehen, und, von einer der Hauptseiten (20A, 20B) der isolierenden Hülle (16) zur anderen, Unterscheidungsmittel, die die Unterscheidung dieser Hauptseiten (20A, 20B) voneinander gestatten, dadurch gekennzeichnet, daß die Unterscheidungsmittel der Hauptseiten (20A, 20B) der isolierenden Hülle (16) Markierungen (21A, 21B) sind, die die Kennzeichnung der Versorgung der betreffenden elektrischen Geräte gestatten.

2. Sammelschiene nach Anspruch 1, dadurch gekennzeichnet, daß die Markierungen (21A, 21B) farbige Markierungen sind.

3. Sammelschiene nach einem der Ansprüche 1, 2, dadurch gekennzeichnet, daß die Markierungen (21A, 21B) sich gleichmäßig über die ganze Länge der Hauptseiten (20A, 20B), denen sie zugeordnet sind, erstrecken.

4. Sammelschiene nach einem der Ansprüche 1 bis 3, dadurch gekennzeichnet, daß die Markierung (21A, 21B) mindestens einer der Hauptseiten (20A, 20B) der isolierenden Hülle (16) von einem auf dieser entsprechend angebrachten Etikett (22A, 22B) getragen ist.

5. Sammelschiene nach einem der Ansprüche 1 bis 4, dadurch gekennzeichnet, daß die Markierung (21A, 21B) mindestens einer der Hauptseiten (20A, 20B) der isolierenden Hülle (16) sich aus dem Aufbringen eines Aufdrucks auf diese ergibt.

6. Sammelschiene nach Anspruch 2, dadurch gekennzeichnet, daß die Markierung (21A, 21B) mindestens einer der Hauptseiten (20A, 20B) sich aus der Färbung der entsprechenden Wand der isolierenden Hülle (16) in der Masse ergibt.

7. Sammelschiene nach Anspruch 2, dadurch gekennzeichnet, daß die farbige Markierung (16) für eine der Hauptseiten (20A, 20B) der isolierenden Hülle (16) blau und die andere rot ist.

8. Sammelschiene nach Anspruch 2, dadurch gekennzeichnet, daß die farbige Markierung (21A, 21B) für eine der Hauptseiten (20A, 20B) der isolierenden Hülle (16) blau und für die andere schwarz ist.

## Claims

1. A busbar for the supply in parallel of modular electrical apparatuses, of the kind comprising a metal bar member (14) enclosed in an insulating sheath (16) which covers both of its two main faces (17A, 17B) with, in spaced relationship, a plurality of connecting lugs (15) which, extending from the bar member (14), project out of the insulating sheath (16) and, from one of the main faces (20A, 20B) of the insulating sheath (16) to the other, differentiation means for distinguishing one of said main faces (20A, 20B) from the other, characterised in that the means for differentiating the main faces (20A, 20B) of the insulating sheath (16) are identification means (21A, 21B) permitting identification of the supply to the electrical apparatuses in question.

2. A busbar according to claim 1 characterised in that the identifications (21A, 21B) are coloured identifications.

3. A busbar according to either one of claims 1 and 2 characterised in that the identifications (21A, 21B) extend uniformly over the entire length of the main faces (20A, 20B) which they concern.

4. A busbar according to any one of claims 1 to 3 characterised in that the identification (21A, 21B) of one at least of the main faces (20A, 20B) of the insulating sheath (16) is carried by a label (22A, 22B) duly fitted thereto.

5. A busbar according to any one of claims 1 to 4 characterised in that the identification (21A, 21B) of one at least of the main faces (20A, 20B) of the insulating sheath (16) results from the application of printing thereto.

6. A busbar according to claim 2 characterised in that the identification (21A, 21B) of one at least of the main faces (20A, 20B) of the insulating sheath (16) results from colouring in the mass of the corresponding wall of the insulating sheath (16).

7. A busbar according to claim 2 characterised in that, for one of the main faces (20A, 20B) of the insulating sheath (16), the coloured identification (21A, 21B) is blue and it is red for the other.

8. A busbar according to claim 2 characterised in that, for one of the main faces (20A, 20B) of the insulating sheath (16), the coloured identification (21A, 21B) is blue, and it is black for the other.
